# EUROPEAN PATENT APPLICATION

(11) **EP 3 248 882 A1**
(43) Date of publication of application: **29.11.2017**
(21) Application number: 16175464.3
(22) Date of filing: 21.06.2016
(51) Int. Cl.: B64D 15/16, B64D 15/20

(54) **DE-ICING SYSTEM**

(30) Priority: 26.05.2016 GB 201609638
(71) Applicant: BAE Systems PLC, London SW1Y 5AD (GB)
(72) Inventor: Sillence, Colin David, Rodborough, Gloucestershire, GL5 5DY (GB); Edmondson, John, Preston, Lancashire, PR4 1AX (GB)
(74) Representative: BAE SYSTEMS plc Group IP Department

(57) **Abstract**

At least part of a vehicle (2) comprising: at least part of a vehicle substructure (8); at least part of a vehicle external skin (6) coupled to the at least part of the vehicle substructure (8) to define a volume therebetween; a rod (12) in the volume, the rod (12) having a first end (16) and an opposite second end (18); and a rod driver (14) coupled to the first end (16) of the rod (12), the rod driver (14) being configured to cause movement of the rod (12); wherein the rod (12) is coupled at its second end (18) to the at least part of the vehicle external skin (6).

## Description

### FIELD OF THE INVENTION

The present invention relates de-icing systems for vehicles.

### BACKGROUND

The accumulation of ice on the surface of a wing of an aircraft can adversely affect the ability of the aircraft to fly. Excessive ice build up may cause an aircraft to crash.

In many aircraft, the detection of ice on the aircraft wings is performed by ground crew or a pilot of that aircraft performing a visual inspection of the aircraft wings before or during flight. If ice is detected, a de-icing system on board the aircraft may be activated to remove ice.

Conventional de-icing systems include those that heat external surfaces of the aircraft thereby causing ice accreted thereon to melt, and also those that apply de-icing fluid to the aircraft skin through orifices in the aircraft skin.

There is a need for improved de-icing systems.

### SUMMARY OF THE INVENTION

In a first aspect, the present invention provides at least part of a vehicle comprising: at least part of a vehicle substructure; at least part of a vehicle external skin coupled to the at least part of the vehicle substructure to define a volume between the at least part of the vehicle external skin and the at least part of the vehicle substructure; a rod located in the volume, the rod having a first end and a second end opposite to the first end; and a rod driver (e.g. a mechanical impulse generator) coupled to the first end of the rod, the rod driver being configured to cause movement of the rod. The rod is coupled at its second end to the at least part of the vehicle external skin.

The second end of the rod may be coupled to (e.g. directly attached to) an internal surface of the at least part of the vehicle external skin.

The rod driver may be configured to generate a mechanical shock impulse in the rod.

The rod driver may comprise a hammer head configured to strike the first end of the rod in a direction that is substantially parallel with a longitudinal axis of the rod.

The rod may comprise a plurality of branches at or proximate to its second end, each of the branches being coupled to a different respective area of the at least part of a vehicle external skin. For example, the rod may bifurcate at or proximate to its second end.

The at least part of the vehicle may be at least part of a wing of an aircraft.

The second end of the rod may be coupled to the at least part of the vehicle external skin at or proximate to a leading edge of the at least part of the aircraft wing.

The rod may comprise a plurality of branches at or proximate to its second end. A first branch may be coupled to an upper surface of the at least part of the aircraft wing at or proximate to the leading edge, and a second branch may be coupled to a lower surface of the at least part of the aircraft wing at or proximate to the leading edge.

The at least part of a vehicle may further comprise: an ice detection system configured to detect ice formed on a surface of the at least part of the external skin; and a controller configured to, responsive to the ice detection system detecting ice formed on a surface of the external skin, control the rod driver to cause movement of the rod.

In a further aspect, the present invention provides a method of forming at least part of a vehicle. The method comprises: providing at least part of a vehicle substructure; coupling at least part of a vehicle external skin the a least part of the vehicle substructure to define therebetween a volume; locating a rod in the volume, the rod having a first end and a second end opposite to the first end; coupling a rod driver to the first end of the rod, the rod driver being configured to cause movement of the rod; and coupling the second end of the rod to the at least part of the vehicle external skin.

In a further aspect, the present invention provides a de-icing method comprising: providing at least part of a vehicle, the at least part of the vehicle being in accordance with any of the above aspects; and causing, by the rod driver, the rod to move, thereby causing movement of the at least part of the external skin.

Causing the rod to move may comprise generating, in the rod by the rod driver, a shock impulse, wherein the generated shock impulse travels along the rod from the first end of the rod to the second end of the rod.

### BRIEF DESCRIPTION OF THE DRAWINGS

Figure 1 is a schematic illustration (not to scale) showing a side view cross section of the aircraft wing leading edge, including an icing prevention system; and
Figure 2 is a process flow chart showing certain steps of a de-icing process.

### DETAILED DESCRIPTION

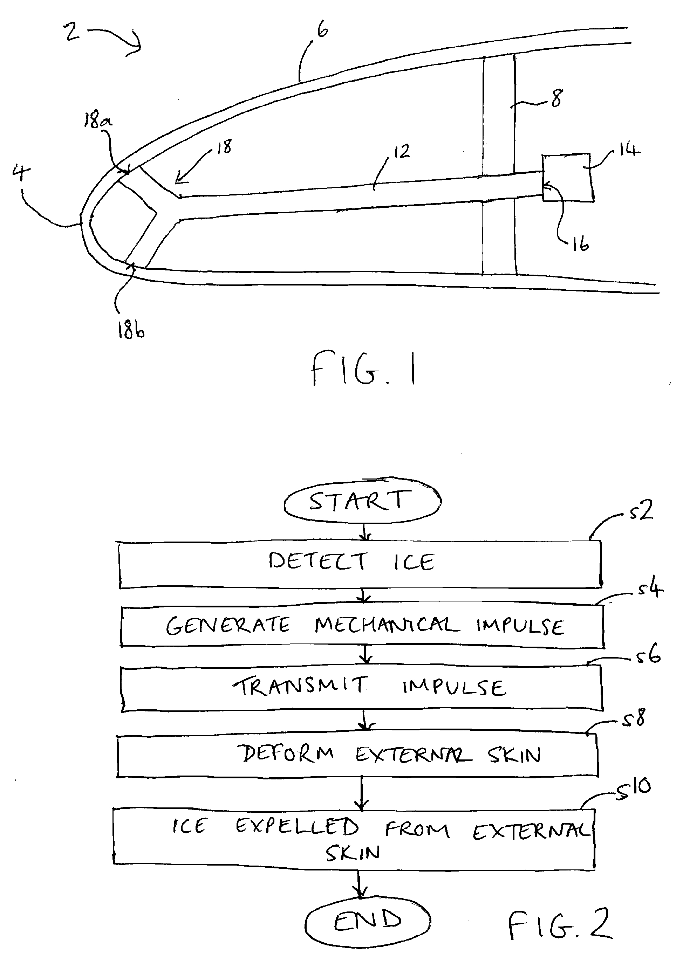

Figure 1 is a schematic illustration (not to scale) of a side view cross section of part of a wing 2 of an aircraft in which an embodiment of an icing prevention system is implemented.

In this embodiment, the aircraft is an unmanned aircraft. However, in other embodiments, the aircraft is a manned aircraft.

The part of the aircraft wing 2 shown in Figure 1 is a part of the aircraft wing 2 at and proximate to a leading edge 4 of the aircraft wing 2.

The aircraft wing 2 comprises an external skin 6 and a wing spar 8.

In this embodiment, the external skin 6 of the aircraft wing 2 is made of a lightweight and strong material such as a carbon fibre composite (CFC) material, i.e. carbon fibres embedded into a polymer matrix.

The spar 8 forms part of a substructure of the aircraft wing 2. The spar 8 is a structural member of the wing 2 that runs spanwise along the length of the aircraft wing 2 and is attached obliquely to the fuselage of the aircraft 2. The spar 8 is made of a lightweight, strong material such as aluminium or a CFC material. The aircraft wing substructure may include one or more additional spars, and/or ribs attached to the spar 8 or spars.

The external skin 6 is fixedly attached to the substructure of the aircraft wing 2 formed at least in part by the spar 8.

In this embodiment, the aircraft wing 2 has a substantially aerofoil-shaped cross-section defined by the external skin 6.

In this embodiment, the aircraft wing 2 further comprises an icing prevention (or de-icing) system. The icing prevention system comprises a rod 12, and a mechanical impulse generator 14 (a generator for generating a mechanical impulse).

In this embodiment, the rod 12 is made of strong, lightweight material such as a plastic such (e.g. polytetrafluoroethylene, PTFE). The rod 12 is a substantially straight, rigid rod having a first end 16 and a second end 18 opposite to the first end. The first end 16 of the rod 12 is attached to the mechanical impulse generator 14. The second end 18 of the rod 12 is attached to an internal surface of the external skin 6 at or proximate to the leading edge 4. In particular, in this embodiment, the rod 12 bifurcates at its second end 18 into a first portion 18a and a second portion 18b. The first portion 18a of the second end 18 of the rod 12 is attached to an internal surface of the external skin 6 at an upper (or suction) surface of the leading edge 4. The second portion 18b of the second end 18 of the rod 12 is attached to an internal surface of the external skin 6 at a lower (or pressure) surface of the leading edge 4.

In this embodiment, the mechanical impulse generator 14 is located in the wing 2 remotely from the leading edge 4 of the wing 2 such that the spar 8 is located between the leading edge 4 and the mechanical impulse generator 14.

As described in more detail later below with reference to Figure 2, in this embodiment, the mechanical impulse generator 14 is configured to generate, in the rod 12, a longitudinal stress wave impulse.

The mechanical impulse generator 14 may be operatively connected to a controller (not shown in the Figures) for controlling operation of the mechanical impulse generator 14.

Apparatus, including the controller for controlling operation of the mechanical impulse generator 14, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 2 is a process flow chart showing certain steps of a de-icing process.

At step s2, ice formation on the external surface of the leading edge 4 of the aircraft wing 2 is detected. Any appropriate ice detection system may be used to detect ice formed on the leading edge 4. Preferably, an automatic ice detection system is implemented. The automatic ice detection system may comprise a sensor or an array of sensors which may be arranged across at least part of the leading edge 4.

At step s4, in response to the detection of ice at the leading edge 4, the mechanical impulse generator 14 generates an axially propagating stress impulse in the rod 12. This impulse may be generated in any appropriate way. For example, a hammer head may be caused to strike or impact with the first end 16 of the rod 12 in a direction that is substantially parallel with a longitudinal axis of the rod 12.

At step s6, the rod 12 transmits the stress impulse formed therein from the mechanical impulse generator 14 to the external skin 6. In particular, in this embodiment, the stress impulse generated by the mechanical impulse generator 14 propagates axially along the rod 12 from the first end 16 of the rod 12 to the second end 18 of the rod 12.

At step s8, upon the stress impulse reaching the second end 18 of the rod 12, energy of the impulse is stress imparted to the external skin 6. The stress impulse travels through the external skin 6 at the leading edge 4, and the ice accreted thereon.

In particular, the first and second portions 18a, 18b of the second end 18 of the rod 12 transferred the stress impulse energy from the rod 12 to the upper and lower surfaces of the external skin 6 at the leading edge 4 respectively.

The stress impulse travelling within the external skin 6 at the leading edge 4 tends to cause the external skin to move at least to some extent, for example in the direction of travel of the stress impulse. In this embodiment, the external skin 6 deforms minutely but rapidly in response to the applied stress impulse. Similarly, the stress impulse travelling within the ice accreted on the external surface of the leading edge 4 tends to cause movement of that ice.

At step s10, the stress impulse travelling through the external skin 6 and ice formed thereon at the leading edge 4, and the deformation of the external skin 6 and ice formed thereon at the leading edge 4 causes that ice to be expelled, or shed, from the leading edge 4, i.e. away from the aircraft 2. Deformation of the external skin 6 tends to crack any ice that has formed on the leading edge 4 which may then be removed from the aircraft wing 4 by airflow over the wing 2.

Thus, a de-icing process is provided.

The above described system and method advantageously tends to detect and remove ice that forms on the external surface of an aircraft wing.

The de-icing action may be selectively performed, for example based upon detection of ice. Thus, the de-icing operation tends not to be performed continuously and only when needed.

It should be noted that certain of the process steps depicted in the flowchart of Figure 2 and described above may be omitted or such process steps may be performed in differing order to that presented above and shown in Figure 2. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the icing prevention system is implemented on an aircraft. However, in other embodiments, the icing prevention system is implemented on a different type of vehicle such as a land-based, or sea-based vehicle.

In the above embodiments, the icing prevention system is implemented at a leading edge of an aircraft wing. However, in other embodiments, the icing prevention system is implemented at a different location on the aircraft.

In the above embodiments, the rod bifurcates at or proximate to the leading edge. This advantageously tends to provide for the transmission of the stress impulse to upper and lower surfaces of the aircraft wing at the leading edge. This tends to provide improved de-icing. Nevertheless, in other embodiments, the rod does not bifurcate. For example, the rod may have no branches, and may be fixed to the external skin at only a single point. In some embodiments, the rod may split into more than two branches which may couple to the external skin at different respective points.

In the above embodiments, the rod is substantially straight. However, in other embodiments, the rod is not straight and may be curved.

In the above embodiments, the icing prevention system comprises a single rod. However, in other embodiments, the icing prevention system comprises multiple rods. In some embodiments, each of the multiple rods is coupled to a different respective position on the external skin of the aircraft. One or more mechanical impulse generators may be configured to generate respective stress impulses in each of the respective rods. Advantageously, each of the rods may have a different amplitude stress impulses generated therein and/or may have stress impulses generated therein at different frequencies. This advantageously tends to allow for intelligent and efficient de-icing of the aircraft wing. For example, an ice detection system, which may include an array of sensors distributed across a portion of the aircraft wing, may be used to determine a point or points on the wing at which ice has accreted. One or more mechanical impulse generators may then be controlled to transmit stress impulses along one or more rods to only the point or points on the wing at which ice has been detected.

## Claims

1. At least part of a vehicle comprising:
at least part of a vehicle substructure;
at least part of a vehicle external skin coupled to the at least part of the vehicle substructure to define a volume between the at least part of the vehicle external skin and the at least part of the vehicle substructure;
a rod at least partially located in the volume, the rod having a first end and a second end opposite to the first end; and
a rod driver coupled to the first end of the rod, the rod driver being configured to cause movement of the rod; wherein
the rod is coupled at its second end to the at least part of the vehicle external skin.

2. At least part of a vehicle according to claim 1, wherein the second end of the rod is coupled to an internal surface of the at least part of the vehicle external skin.

3. At least part of a vehicle according to claim 2, wherein the second end of the rod is fixedly attached to the internal surface of the at least part of the vehicle external skin.

4. At least part of a vehicle according to any of claims 1 to 3, wherein the rod driver is configured to generate a mechanical shock impulse in the rod.

5. At least part of a vehicle according to claim 4, wherein the rod driver comprises a hammer head configured to strike the first end of the rod in a direction that is substantially parallel with a longitudinal axis of the rod.

6. At least part of a vehicle according to any of claims 1 to 5, wherein the rod comprises a plurality of branches at or proximate to its second end, each of the branches being coupled to a different respective area of the at least part of a vehicle external skin.

7. At least part of a vehicle according to claim 6, wherein the rod bifurcates at or proximate to its second end.

8. At least part of a vehicle according to any of claims 1 to 7, wherein the at least part of the vehicle is at least part of a wing of an aircraft.

9. At least part of a vehicle according to claim 8, wherein the second end of the rod is coupled to the at least part of the vehicle external skin at or proximate to a leading edge of the at least part of the aircraft wing.

10. At least part of a vehicle according to claim 9, wherein the rod comprises at least two branches at or proximate to its second end, a first branch being coupled to an upper surface of the at least part of the aircraft wing at or proximate to the leading edge, and a second branch being coupled to a lower surface of the at least part of the aircraft wing at or proximate to the leading edge.

11. At least part of a vehicle according to any of claims 1 to 10, further comprising:
an ice detection system configured to detect ice formed on a surface of the at least part of the external skin; and
a controller configured to, responsive to the ice detection system detecting ice formed on a surface of the external skin, control the rod driver to cause movement of the rod.

12. A method of forming at least part of a vehicle, the method comprising:
providing at least part of a vehicle substructure;
coupling at least part of a vehicle external skin the a least part of the vehicle substructure to define therebetween a volume;
locating a rod at least partially in the volume, the rod having a first end and a second end opposite to the first end;
coupling a rod driver to the first end of the rod, the rod driver being configured to cause movement of the rod; and
coupling the second end of the rod to the at least part of the vehicle external skin.

13. A de-icing method comprising:
providing at least part of a vehicle, the at least part of the vehicle being in accordance with any of claims 1 to 11; and
causing, by the rod driver, the rod to move, thereby causing movement of the at least part of the external skin.

14. A de-icing method according to claim 13, wherein causing the rod to move comprises generating, in the rod by the rod driver, a shock impulse, wherein the generated shock impulse travels along the rod from the first end of the rod to the second end of the rod.
